(19) **Europäisches Patentamt**

**European Patent Office**

**Office européen des brevets**

(11) **EP 1 207 472 A1**

(12) **EUROPEAN PATENT APPLICATION**

(43) Date of publication:
**22.05.2002 Bulletin 2002/21**

(51) Int Cl.⁷: **G06F 17/60**

(21) Application number: **00204021.0**

(22) Date of filing: **16.11.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Koninklijke KPN N.V.**<br>**9726 AE Groningen (NL)**<br><br>(72) Inventor: **Gelbord, Boaz Simon**<br>**1016 VS Amsterdam (NL)** | (74) Representative: **Wuyts, Koenraad Maria et al**<br>**Koninklijke KPN N.V.,**<br>**Intellectual Property Group,**<br>**P.O. BOX 95321**<br>**2509 CH The Hague (NL)**<br><br>Remarks:<br>The references to figure 3 are deemed to be deleted (Rule 43 EPC). |

(54) **Securely matching supply and demand in multiparty environments**

(57) A method for matching selections of a number of parties from a predetermined range of choices comprising selecting a range of choices, selecting at least one committed value of said range by each party, determining a predetermined number (n) by a central authority, composing a commitment message by each party, including a control number corresponding respectively with each committed value of said range, based on said predetermined number, sending by each party of its commitment message to a central authority, verification by the central authority of the received commitment messages including checking of the presence of at least one committed value, evaluation by the central authority of the received commitment messages for a match between the received commitment messages, and sending an evaluation result to each party by the central authority.

| | |
|---|---|
| | task 1 |
| | task 2 |
| | task 3 |
| | task 4 |
| | task 5 |
| | task 6 |

— 10

**Fig. 1**

## Description

The invention relates to a method for matching requests in a multiparty environment.

In networked computer applications, and especially over the Internet, the situation frequently arises that a number of parties want to determine whether a set of goods or services can be divided amongst themselves according to their preferences. They would like to do so with minimal disclosure of their preferences and, in the case that there is no match, to have the ability to re-adjust their preferences in such a way as to facilitate a match. This is the case in for example an electronic dating situation where each party must indicate its preference for another but no party wants to reveal its preferences unless there is a match, and all parties want to re-adjust their preferences to facilitate a match.

The known method of using a trusted third party to collect the preferences of each of the participating parties from the range of choices can be used to solve the problem. However, over networks like the Internet this procedure is often complex and poses many security risks. Also in many cases there is no trusted third party that is acceptable for all the participating parties.

The goal of the invention is to provide a method that solves these disadvantages, by means of which a group of participating parties can reach a matching of their preferences from a predetermined range without revealing the content of their preferences to the other parties, with the aid of a central authority that is not necessarily a trusted third party for each of the participating parties.

This goal is achieved by a method according to claim 1.

Each participating party commits itself to a set of preferences selected from a predetermined range that is the same for each party. The participating parties each compile commitment messages with control numbers for each value in the range; the control numbers are selected based on a master control modulus the factors of which are only available to the central authority. The control numbers are selected such that the central authority can know to which values each of the participating parties has committed as a preference, but such that the central authority cannot alter these commitments. The central authority first verifies that each participating party has committed to at least one value. If the verification reveals that one or more of the participating parties did not commit to any value, the central authority terminates the procedure.

Consecutively the central authority verifies, for example using known algorithms in graph theory, whether there is a matching of parties with preferences such that each one of the participating parties receives one of its preferences and such that no two parties are assigned to the same value. If this verification reveals that there is such a match, the central authority sends this match to each of the parties and demonstrates to the participating parties that each of said parties has been assigned a preference which was committed to earlier.

With this method parties can compare choices among themselves, without revealing their choices to the other parties. The central authority can inspect the choice of each party, but the central authority can not change any single choice, without being detected. Therefore the level of trust needed for the central authority to be acceptable to the parties is low, and consequently finding a central authority suitable for each party is relatively easy. Messages in transit between the parties do not leak information, which significantly reduces the security requirements for the network used.

In a further embodiment of the invention, the central authority produces restrictions on the choice of preferences that the participating parties may commit to in case the verification reveals that there is no matching. These restrictions, which are defined to facilitate a matching, are communicated to the parties, and consecutively each party delivers a new proposition using the above mentioned steps. The process is then iterated until either a matching is found or the participating parties choose to terminate the process.

Particularly advantageous elaborations of the invention are set forth in the dependent claims. Further objects, elaborations, modifications, effects and details of the invention appear from the following description, in which reference is made to the drawing, in which

Fig.1 shows an example of a range of choices,
Fig. 2 shows a flow diagram of the composition of a commitment message, and
Fig. 3 shows a flow diagram of the tasks of the central authority.

In the following example of an embodiment of the invention a number of parties want to divide a number of tasks amongst themselves in such a way that every party receives a task it has declared a preference for.

First a list or array of subjects that have to be divided between the parties is established. These tasks could be e.g. assignments that have to divided among personnel of a section; in that case each individual will want to express his or her preference without the other people finding out the chosen preference until the final division has been made. The invention is not limited to such tasks but can also be used for matching other subjects such as service, positions, personalia for electronic dating, other people, times, buying and selling rights. In particular the invention can be used for matching items that are sections of a range, for example a range between 0-100, with the items being the intervals 0-10, 11-20, ..., 91-100.

Although in this example a number of tasks is divided among the parties, the invention is not limited to such a division of tasks. Other implementations are also possible, for instance finding a common denominator among a predetermined list of objects, and any other matching method in which party choices are compared using a matching criterion.

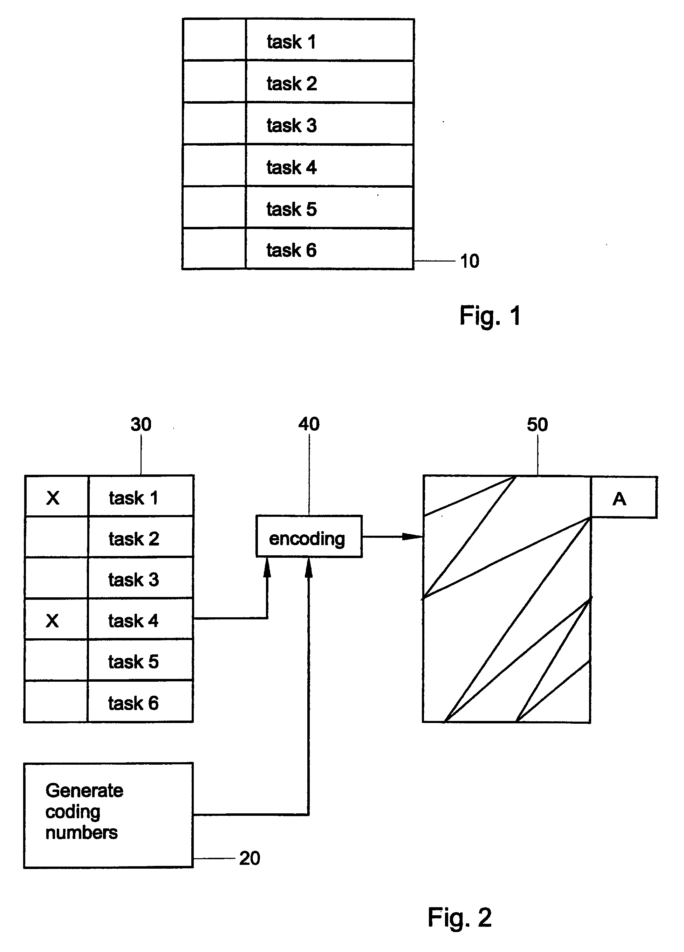

An example of a list of tasks 10 is shown in fig. 1, which list 10 comprises the six tasks 1-6. The tasks listed on list 10 are to be divided among four parties A, B, C, and D. Between the parties A, B, C, and D is established that they are to make one of more selections of the same list. The composition of the list 10 can be made in any suitable way, such as in mutual agreement among the parties, by one party, or be established by a non-participating party.

Furthermore, the participating parties agree on a central authority X, that co-ordinates the mediation between the participating parties. With the method according to the invention, tampering of the central authority is always detectable; therefore the level of trust the parties need to have to agree with a certain central authority is low. The role of the central authority can be fulfilled by a Certificate Authority. The advantage is that certificate authorities are available and have enough credibility for most potential parties to accept the role of central authority.

In the following the number of tasks (t) and the number of parties (s) are integers and in this case (t) is greater than or equal to (s). In this embodiment there are four participating parties and the number of tasks (t) is six. The invention can be implemented with 2 or more parties, and 2 or more tasks.

After the list of tasks 10 has been established, a range of values is defined, indicated by unique numbers between 1 and $t$, wherein $t$ is a positive integer, whereby each number uniquely identifies a single subject of the list 10.

The functioning of the central authority X is illustrated in the flow chart of fig. 3. The central authority X generates (step 90) two random primes $p$, $q$ of a bit size $c$; $p$ and $q$ are chosen such that -1 is a non-quadratic residue modulo $p$ and $q$. Both $p$ and $q$ are kept secret by X. Subsequently a parameter $n$ is determined (step 95) as:

$$n=pq.$$

The central authority X subsequently sends the parameter $n$ to each of the participating parties A, B, C, D.

Party A as well as the other participating parties each generate (see fig. 2, step 20) a range of control numbers $a\_1,...,a\_t$ by selecting for each $a\_i$ ($1<=i<=t$) a random value $k$ that fulfils both the conditions:

- $1<k<n$, and
- $k$ is a quadratic residue modulo $n$.

Result is a list of control numbers for each of the items of the list 10, whereby each party has its own specific control numbers.

Consecutively, party A makes its choice of the tasks on the list 10; at least one choice has to be made by each party. In fig. 2, this has been indicated for party A by crosses for task 1 and task 4.

Party A as well as the other participating parties each compose (indicated by the encoding step 40 in fig. 2) a commitment message (indicated with 50 in fig. 2) comprising the numbers:

$$\{a\_1,..., -a\_j,...a\_t\}$$

where j is in the set A', that is to say, the committed choices of that party from the range. One or more choices can be made by each party, according which a party can have more than one value for $j$.

In the commitment message the participating parties have indicated the values between 1 and t which they have committed themselves to by taking the additive inverse value. A party does not disclose for which indices this additive inverse value has been applied. The commitment message 50 can only be read with the according numbers $p$ and $q$, which are only known by the central authority X. Without numbers $p$ and $q$, solving the message requires solving of a mathematical problem of the non-deterministic polynomial type, which requires with so much time and calculating resources that, provided the bit size c has been chosen large enough, the commitment message can not leak information when intercepted by a third party.

Subsequently each participating party sends its commitment messages to the central authority X. The central authority X receives all the commitment messages (step 100) and verifies whether each commitment message contains at least one committed value (step 120). This can be done by decoding (step 110) the message using the numbers $p$ and $q$.

If this verification reveals that there is a participating party which has not committed to any value, the central authority X can subsequently cancel the protocol (step 125).

If the verifications of each of the participating parties are validated, it is established that each of the parties has committed to at least one preference of the range. In the next phase of the procedure according to the invention the central authority X will verify whether there is a match between the committed preferences and the values available (step 140). In this embodiment of the invention, the known method of finding a maximum matching in a bipartite graph is used to achieve this. The invention can however be implemented with any suitable method of matching between sets of choices.

Finding a maximum matching in a bipartite graph is a well known technique, so a detailed description of the working of graph based matching is left out.

For finding the maximum matching, the central authority X creates a bipartite graph with one set of vertices representing the participating parties and the other set of vertices representing the range of values. The edges in this graph are determined by the committed preferences. At this point the central authority verifies whether there is a maximum matching in this graph. If the verification reveals that there is such a matching, then the central authority sends this matching to the participating parties (step 160), and reveals the committed values corresponding to the values in the matching. These committed values are revealed by providing the square root modulo n of the control numbers, so that each party can confirm the validity of the match.

If the verification by the central authority reveals that there is no maximum matching, the central authority determines additional criteria for the choices of the parties (step 145). The restrictions to the choices resulting from the additional criteria will facilitate convergence of the matching process. In this embodiment the central authority determines these additional criteria using well known graph algorithmic techniques a minimum set of preferences which violates the maximum matching; namely this set is of minimum size such that the set of vertices connected to members of this set is greater in number than the size of the set. The central authority then reveals this set of preferences to the participating parties as additional criteria for the selections made by each party (step 150).

The protocol then iterates itself, with the further condition that the participating parties must fulfil the additional criteria and in this example may not commit themselves solely to values contained in the set revealed by the central party. In the verification phase the central authority verifies that each participating party has committed itself to at least one value outside of said set (step 130). If this verification fails, the central authority terminates the protocol. If the verification passes, then the protocol is iterated until a maximum matching is found or the participating parties themselves decide to terminate the protocol. The central authority verifies the commitments of the participating parties to be valid with respect to disallowed minimal sets arising from previous commitments. Although the graph theory used in this example is advantageous in that additional selection criteria can be determined efficiently, other methods of matching and other ways of constructing additional criteria for converging the matching process can be used according to the invention.

If the application of the additional criteria by the parties does not result in a match, the central authority can determine further additional criteria, that are added to the criteria already used. This can be in the form of additional disallowed sets. The procedure of determining additional criteria is the same as described above; the loop formed by the consecutive steps 100-110-120-130-140-145-150-100 is repeated until a match has been reached.

Using the above described method the participating parties have been able to compare whether there is a matching between their preferences without the need for a trusted third party and without the risk of unnecessarily disclosing their commitments.

If information is intercepted during the exchange of information between the participating parties and the central party, e.g. in case of a non secure connection such as the Internet, the third party will not gain knowledge of the commitment values of any of the parties. Also, the commitment messages do not leak information, as they are encrypted using a recognised hard mathematical problem, provided that the parameter length corresponding with the problem, c in this example, is long enough.

Optionally, each party sends its commitment message to the central authority and each of the other parties. Each party can verify for itself whether all the messages commit to at least one value, for example after a matching has been made and the central authority provides the parties with the numbers $p$ and $q$.

The number of computations that have to be performed as well as the memory requirement are polynomial in the size of the parameters used.

The invention is not limited to the protection of the commitment message used in the above described embodiment by means of the quadratic residue problem. This protection can also be achieved according to the invention by way of other well known difficult mathematical problems such as factoring large numbers, computing discrete logarithms, and in general mathematically difficult problems.

In the previous example, the choices of each party have equal weight in the determination of a match. The invention can also be implemented with certain participating parties having priority in committing to values in said range over other parties. In this case the central authority will reward the choices of priority parties over choices of other parties when evaluating a possible matching. Also the central authority can define additional criteria to suit the priorities of certain parties.

Although in the shown examples the central authority is implemented as a single entity, the invention can also be implemented with a central authority which forms a logical entity, which performs the various tasks distributed over several computer elements.

The invention can be implemented for example in a protocol suitable to be executed in a networked computer environment, such as a LAN or the Internet. The invention can also be implemented on an Internet server that provides an e-commerce environment to which parties have secure access.

The invention can be implemented in software, suitable for running on a client computer of each one of the parties involved. The software program product includes program portions for executing the respective steps of the method according to the invention. In particular the program product according to the invention can be implemented as software suitable to be downloaded over a network like the Internet.

**Claims**

1. A method for matching selections of a number of parties from a predetermined range of choices comprising

   selecting a range of choices,

   selecting at least one committed value of said range by each party, **characterised by**

   determining a predetermined number (n) by a central authority,

   composing a commitment message by each party, including a control number corresponding respectively with each committed value of said range, based on said predetermined number,

   sending by each party of its commitment message to a central authority,

   verification by the central authority of the received commitment messages including checking of the presence of at least one committed value,

   evaluation by the central authority of the received commitment messages for a match between the received commitment messages, and

   sending an evaluation result to each party by the central authority.

2. A method according to claim 1, further comprising

   determining an additional criterion for the selections of the parties based on said evaluation,

   sending the additional criterion to each party, and

   evaluation by the central authority of the received commitment messages including checking each commitment message for compliance with said additional criterion.

3. A method according to claim 2, further comprising

   evaluation by the central authority of the received commitment messages by means of graphical algorithms.

4. A method according to claim 3, further comprising

   evaluation by the central authority of the received commitment messages by means of graphical algorithms, including finding a minimal set between the commitment messages,

   determining an additional criterion based on said minimal set.

5. A method according to any one of claim 1-4, further comprising

   sending by each party of its commitment message to the other parties, and

   verification by each party of received commitment messages.

6. A method according to any one of claim 1-5, wherein the control numbers comprise for each choice of said range a quadratic residue modulo a number (n) predetermined by the central authority, wherein said predetermined number (n) is the multiplication of at least two prime numbers (p,q).

7. A method according to claim 6, wherein the control number associated with said at least one committed value comprises the additive inverse of a quadratic residue modulo of said predetermined number (n).

8. A method according to any one of claims 2-7, wherein the central authority verifies the commitments of the participating parties to be valid with respect to previous commitments.

9. A method according to any one of the preceding claims where at least one of the participating parties has priority in committing to values in said range over other parties.

10. A method according to any one of the preceding claims, wherein the role of the central authority is fulfilled by a Certificate Authority.

11. Computer program product, directly loadable into the internal memory of a computer, comprising software portions for performing the steps of any one of the above claims, when said product is run on a computer or other networked entity.

| | task 1 |
|---|---|
| | task 2 |
| | task 3 |
| | task 4 |
| | task 5 |
| | task 6 |

— 10

## Fig. 1

30  40  50

| | task 1 |
|---|---|
| X | task 1 |
| | task 2 |
| | task 3 |
| X | task 4 |
| | task 5 |
| | task 6 |

encoding

A

Generate coding numbers

— 20

## Fig. 2

**European Patent
Office**

**DECLARATION**

**Application Number**

which under Rule 45 of the European Patent Convention EP 00 20 4021
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | **CLASSIFICATION OF THE APPLICATION (Int.Cl.7)** |
|---|---|
| Reason: | G06F17/60 |

The subject-matter claimed in claims 1-10
falls under the provisions of Article
52(2) and (3) EPC, such subject-matter
relating to a method of doing business and
mathematical methods.

Claim 11 relates to a conventional
computer program product for performing
the business method and mathematical
methods of claims 1-10. Although this
claim does not literally belong to the
method category, it essentially claims
protection for the same commercial effect
as the method claims. The Search Division
considers that searching this
subject-matter would serve no useful
purpose. It is not at present apparent how
the  subject-matter of the present claims
may be considered defensible in any
subsequent examination phase in front of
the EPO with regard to the provisions of
Articles 54 and 56 EPC (novelty, inventive
step); see also Guidelines B-VII, 1-6.

The applicant's attention is drawn to the
fact that a search may be carried out
during examination following a declaration
of no search under Rule 45 EPC, should the
problems which led to the declaration
being issued be overcome (see EPC
Guideline C-VI, 8.5).

---
-----

| Place of search | Date | Examiner |
|---|---|---|
| THE HAGUE | 3 August 2001 | FERNANDEZ FERRE.., M |

EPO FORM 1504 (P04C37)